# EUROPÄISCHE PATENTSCHRIFT

(11) **EP 4 344 534 B1**
(45) Veröffentlichungstag und Bekanntmachung des Hinweises auf die Patenterteilung: **19.02.2025**
(21) Anmeldenummer: 23196007.1
(22) Anmeldetag: 07.09.2023
(51) Int. Cl.: A01F 15/07

(54) **RUNDBALLENPRESSE**
ROUND BALER
PRESSE À BALLES RONDES

(30) Priorität: 30.09.2022 DE 102022125387
(43) Veröffentlichungstag der Anmeldung: 03.04.2024
(73) Patentinhaber: Maschinenfabrik Bernard Krone GmbH & Co. KG, 48480 Spelle (DE)
(72) Erfinder: Kracht, Katharina, 49832 Andervenne (DE); Kalverkamp, Felix, 45665 Recklinghausen (DE)

(56) Entgegenhaltungen:
- EP-A1- 2 932 821
- EP-A1- 3 721 699
- EP-A1- 3 785 521
- EP-B1- 3 043 632
- DE-U1- 202019 105 334
- US-B2- 9 320 199

## Beschreibung

Die vorliegende Erfindung betrifft eine Rundballenpresse nach dem Oberbegriff von Anspruch 1 sowie eine Bindeeinheit nach dem Oberbegriff von Anspruch 14.

Rundballenpressen werden in der Landwirtschaft eingesetzt, um Erntegut wie zum Beispiel Heu oder Stroh aufzunehmen und zu Ballen zu verpressen. Das Erntegut wird (zum Beispiel durch eine Pick-up) vom Boden aufgenommen, weitergefördert, normalerweise zerkleinert (zum Beispiel mittels eines Schneidrotors) und schließlich in einer Presskammer zu runden Erntegutballen verpresst, die anschließend mit einem Bindematerial umwickelt werden. Rundballenpressen weisen regelmäßig eine Bindeeinheit auf, die zur Aufnahme einer Bindematerialrolle oder dergleichen ausgebildet ist, sowie dazu, das Bindematerial zur Presskammer zuzuführen, zum Beispiel mittels eines beweglichen Zuführschnabels, der ein Ende des Bindematerials erfasst. Das zugeführte Bindematerial kann dann zum Binden des gepressten Ballens genutzt werden. Als Bindematerial können Schnüre, Netze oder (zum Beispiel im Falle von Gras) Folien verwendet werden, wobei letztere auch außerhalb der Rundballenpresse in einem hiervon separaten Ballenwickelgerät appliziert werden können.

Es sind auch Rundballenpressen mit einer Mehrzahl von Bindeeinheiten bekannt, wobei beispielsweise unterschiedlichen Arten von Bindematerial eingesetzt werden können. Eine sogenannte Doppelbindung besteht aus zwei vollständigen Bindeeinheiten. Das heißt, es sind zwei Bindematerialrollen vorgesehen, sowie eine eigene Zuführeinheit für jede Bindeeinheit. Des Weiteren sind für jede Bindeeinheit üblicherweise weitere Komponenten vorgesehen, zum Beispiel eine Bremseinheit, die das Abrollen des Bindematerials verlangsamt und so den Bindematerialstrang strafft, sowie eine Raffeinheit, die den Bindematerialstrang vor der Presskammer seitlich zusammenrafft. Die Doppelbindung ist insofern zumindest weitgehend redundant, normalerweise sind alle Komponenten doppelt vorhanden, bei einigen Modellen wird aber auch die Raffeinheit von beiden Bindeeinheiten gemeinsam genutzt. Der Wechsel des Bindematerials ist ferngesteuert oder vollautomatisch möglich und erfordert keine weitere Verstellung an der Maschine. Aufgrund der doppelt vorhandenen Komponenten ist diese Ausgestaltung allerdings kostenintensiv und erhöht das Gewicht der Rundballenpresse.

Eine kostengünstigere Variante ist die 1,5fach-Bindung. Dabei können zwei Bindematerialrollen mit jeweils einer eigenen Bremseinheit vorgesehen sein, allerdings nur eine Zuführeinheit, über die das Bindematerial von jeweils einer der Bindematerialrollen zur Presskammer geführt wird. Ein Materialwechsel erfordert kein Austauschen der Bindematerialrolle, allerdings muss beim Wechsel jeweils das lose Ende des Bindematerials in die Zuführeinheit eingefädelt werden. Außerdem erhöht die doppelt vorhandene Bremseinheit Gewicht und Kosten. Eine andere Variante der 1,5fach-Bindung sieht ebenfalls nur eine Zuführeinheit vor, allerdings sind die Bindematerialrollen ähnlich einem Revolver verschwenkbar und können abwechselnd (zum Beispiel über ein Zahnradpaar) an eine einzige Bremseinheit gekoppelt werden. Üblicherweise erfolgt die Einleitung der Bremskraft in die Bindematerialrolle über den Rollenkern, welcher oftmals aus Pappe besteht. Gemäß einer Ausgestaltung greifen Krallen in den Rollenkern ein, was zu einem Ausfransen führen kann, so dass die Bremswirkung nachlässt oder komplett verloren geht. Durch Regen oder hohe Luftfeuchtigkeit kann der Rollenkern aufweichen, was ebenfalls zum Verlust der Bremswirkung führt. Bei ebenfalls bekannten Kernen aus Kunststoff können die Krallen in der Regel nicht ausreichend greifen und die Bremskraft kann nicht übertragen werden. Als weiterer Nachteil dieses System ist das aufwändige Verschwenken der Bindematerialrollen zu sehen, welche eine erhebliche Masse aufweisen, die typischerweise zwischen 50 und 100 kg liegt.

Die EP 3 043 632 B1 offenbart eine Rundballenpresse, mit einer Ballenpresskammer sowie zwei Wickelmechanismen, die jeweils zur Aufnahme einer Wickelmaterialrolle ausgebildet sind und ein Betätigungselement sowie eine Schneidvorrichtung aufweisen. Jedes Betätigungselement kann drei Positionen einnehmen, nämlich eine erste Position, in der das Betätigungselement das Wickelmaterial in eine Anfangszufuhrpositionen bewegt, eine zweite Position, in der das Wickelmaterial in einer Zufuhrposition positioniert ist, und eine dritte Position, in der das Betätigungselement das Wickelmaterial in eine Schneidposition bewegt, in der das Wickelmaterial mit der Schneidvorrichtung in Kontakt steht.

Die US 9 320 199 B2 zeigt eine Ballenpresse mit einer Netzwickelvorrichtung, einem erstes Netzstützrohr zum Stützen einer erste Netzrolle sowie einem zweiten Netzstützrohr zum Stützen einer zweiten Netzrolle, sowie einer Mehrzahl von Bremssystemen, wobei jedes Bremssystem so konfiguriert ist, dass es Spannung auf eine entsprechende der ersten und zweiten Netzrollen ausübt und löst. Außerdem ist ein Zuführungsmechanismus dazu eingerichtet, das Netz von einer der ersten und zweiten Netzrollen zuzuführen, und umfasst mindestens zwei bewegliche Arme, die mit dem jeweiligen Bremssystem verbunden sind, so dass jeder bewegliche Arm so konfiguriert ist, dass er mindestens eines der jeweiligen Bremssysteme veranlasst, die Spannung auf eine jeweilige Netzrolle auszuüben und die Spannung zu lösen.

Aus der EP 3 721 699 A1 ist eine Ballenwickelvorrichtung für eine Ballenpresse bekannt, mit einer ersten Umwicklungsmaterialrolle mit einem ersten Umwicklungsmaterial, und einer ersten Abrolleinrichtung, wobei die erste Abrolleinrichtung eine Ladeeinrichtung zum Beladen der ersten Abrolleinrichtung mit der ersten Umwicklungsmaterialrolle umfasst, und die Ladeeinrichtung um eine Schwenkachse schwenkbar gelagert ist und zwischen einer Ladestellung und einer Betriebsstellung schwenkbar ist. Die Ladeeinrichtung weist eine Anpressrolle auf, wobei die Schwenkachse parallel zur Rotationsachse der Anpressrolle angeordnet ist, und die Ladeeinrichtung in der Betriebsstellung mittels der Anpressrolle auf die erste Umwicklungsmaterialrolle wirkt, um diese mit einer Anpresskraft zu beaufschlagen.

Die EP 3 785 521 A1 offenbart eine landwirtschaftliche Ballenpresse mit einer Presskammer zum Pressen von Erntegut in einen Ballen, mit einer Bindung mit mindestens einer Bindeeinheit, die einen Aufnahmeraum zur Aufnahme einer Bindemittelrolle aufweist, dessen entrolltes Bindemittel zum Binden des gepressten Ballens vorgesehen ist, wobei die Bindeeinheit von einer in einem Betriebszustand der Ballenpresse vorgesehenen Betriebsposition in eine in einem Wartungszustand vorgesehene Wartungsposition verschwenkbar ist, wobei die Bindeeinheit zumindest eine erste Umlenkrolle und/oder eine Zuführeinheit umfasst, die gemeinsam mit ihr von der Betriebsposition in die Wartungsposition verschwenkbar ist.

Die DE 20 2019 105 334 U1 offenbart eine Bindeeinheit zum Umwickeln von Erntegutballen mit einem Bindematerial, umfassend eine Zuführeinrichtung zum Zuführen des Bindematerials, eine Schneideinrichtung zum Abschneiden des Bindematerials nach Umwickeln des Erntegutballens, sowie einen Bindematerialspeicher, der zumindest zwei Speicherräume zum Aufnehmen von zwei Bindematerialrollen aufweist. Die beiden Speicherräume sind einschließlich der darin aufgenommenen Wickelrollen relativ zueinander verschwenkbar, wobei einer der Speicherräume aus einer Betriebsstellung, in der sich die beiden Speicherräume parallel zueinander erstrecken, von dem anderen Speicherraum in eine Wartungsstellung wegschwenkbar gelagert ist, in der ein Wartungsraum zwischen den beiden Speicherräumen freigegeben ist.

Die EP 2 932 821 A1 zeigt einen Wickelmechanismus zum Einwickeln von Erntematerial in einer Erntemaschine, mit mindestens zwei Materialstützzylindern, die sich zwischen einer ersten und einer zweiten Stützplatte erstrecken, in funktionsfähigem Kontakt mit mindestens einer der Stützplatten stehen, und drehbar um eine Stützachse angebracht sind. Ein Antriebsmechanismus ist mit mindestens der ersten Trägerplatte verbunden, so dass er die Drehung der Materialstützzylinder von einer ersten radialen Position zu einer der Vielzahl von radialen Positionen um die Trägerachse erleichtert. Die Materialstützzylinder sind zum Stützen von Rollen von Verpackungsmaterial und/oder zum Laden oder Entladen einer Rolle von Verpackungsmaterial an der ersten radialen Position konfiguriert, und mindestens eine radiale Position mindestens eines Materialstützzylinders ist zum Abgeben von Verpackungsmaterial konfiguriert.

Aufgabe der Erfindung ist es, bei einer Rundballenpresse sowohl die Anzahl der Komponenten als auch den Aufwand für einen Wechsel zwischen verschiedenen Bindematerialien zu optimieren.

Die Aufgabe wird gelöst mit einer Rundballenpresse mit den Merkmalen des unabhängigen Patentanspruchs 1. Vorteilhafte Ausführungsformen sind den abhängigen Ansprüchen entnehmbar.

Dafür wird eine Rundballenpresse geschaffen, mit einer Pressvorrichtung zum Pressen von landwirtschaftlichem Erntegut zu einem Ballen in einer Presskammer, sowie einer Bindeeinheit, aufweisend ein Bindegehäuse, eine wenigstens teilweise im Bindegehäuse angeordnete Mehrzahl von Rollenaufnahmen zur jeweils drehbaren Aufnahme einer Bindematerialrolle, eine Zuführeinheit, durch die Bindematerial von jeweils einer aus der Mehrzahl von Rollenaufnahmen auswählbaren aktiven Rollenaufnahme in Richtung der Presskammer heranführbar ist, sowie eine Bremseinheit, die dazu eingerichtet ist, zum Bremsen einer Bindematerialrolle wenigstens indirekt mit dieser zusammenzuwirken.

Die Rundballenpresse ist zum Pressen von landwirtschaftlichem Erntegut zu (Rund-) Ballen ausgebildet. Sie kann selbstfahrend ausgebildet sein oder dazu vorgesehen sein, von einem Schlepper gezogen zu werden. Bei dem landwirtschaftlichen Erntegut kann es sich insbesondere um Halmgut wie Gras, Stroh oder Heu handeln, aber zum Beispiel auch um Häckselmais. Sie weist in aller Regel einen Rahmen auf, der gewissermaßen die Grundstruktur der Rundballenpresse bildet und ihr insgesamt Stabilität verleiht. Am Rahmen sind über eine geeignete Aufhängung auch die Laufräder der Rundballenpresse angebunden, ebenso wie - im Falle einer gezogenen Ausgestaltung - eine Deichsel. Außerdem weist der Rahmen typischerweise ein Gehäuse auf, das die innenliegenden Teile, namentlich die Pressvorrichtung, nach außen abschirmt. Der eigentliche Pressvorgang erfolgt innerhalb der Presskammer durch die Pressvorrichtung, welche wenigstens teilweise, gegebenenfalls auch vollständig, innerhalb eines Rahmens angeordnet sein kann. Die Presskammer, in der die Ballenbildung und das Pressen des Ballens erfolgen, ist wenigstens teilweise durch die Pressvorrichtung begrenzt oder definiert. Die Pressvorrichtung weist typischerweise wenigstens ein gegenüber dem Rahmen bewegliches Presselement (normalerweise eine Mehrzahl von Presselementen) auf. Das Erntegut kann mit einer Pick-up aufgenommen werden und mit einer Fördervorrichtung, zum Beispiel einem Förderrotor, weiter in Richtung der Presskammer gefördert werden. Statt einer einfachen Fördervorrichtung oder zusätzlich zu dieser kann eine Schneidvorrichtung vorgesehen sein, die das Erntegut nicht nur weiterfördert, sondern auch schneidet. Normalerweise weist die Rundballenpresse einen Zuführkanal auf, den der Erntegutstrom durchläuft, bevor er zur Presskammer gelangt.

Weiterhin weist die Rundballenpresse eine Bindeeinheit auf. Diese dient dazu, einen Bindevorgang einzuleiten, bei dem ein Ballen nach seiner Formung mit Bindematerial versehen wird, zum Beispiel mit wenigstens einer Schnur, einem Netz oder einer Folie. Die Bindeeinheit kann bezüglich einer Längsachse vorderseitig der Presskammer angeordnet sein, das heißt die Bindeeinheit kann in Fahrtrichtung an oder vor der Vorderseite der Presskammer angeordnet sein. Es sind aber auch andere Anordnungen denkbar, zum Beispiel oberhalb der Presskammer und/oder bezüglich der Längsachse hinterseitig der Presskammer. Die Bindeeinheit weist ein Bindegehäuse auf. Dieses bildet ein stabiles Gerüst, an welchem andere Komponenten der Bindeeinheit starr oder beweglich angeordnet sein können. Das Gehäuse ist normalerweise in sich starr ausgebildet und kann aus einer Mehrzahl von starr verbundenen Teilen bestehen. Der Begriff "Gehäuse" ist nicht dahingehend auszulegen, dass dieses überwiegend geschlossen ausgebildet sein muss. Man kann auch von einem Binderahmen sprechen. Bei einigen Ausführungsformen ist das Bindegehäuse klar abgegrenzt, insbesondere von einem oben genannten Gehäuse, das die Presskammer umschließt. Bei anderen Ausführungsformen können diese beiden Gehäuse wenigstens teilweise einteilig miteinander ausgebildet sein. Sie können dabei ohne klare Abgrenzung ineinander übergehen. In diesem Fall bildet das Bindegehäuse einen Abschnitt oder einen Teil eines Gesamtgehäuses. Entsprechend sind auch Ausführungsformen denkbar, in denen das Bindegehäuse wenigstens teilweise einteilig mit dem oben genannten Rahmen der Rundballenpresse ausgebildet ist.

Weiterhin weist die Bindeeinheit eine wenigstens teilweise im Bindegehäuse angeordnete Mehrzahl von Rollenaufnahmen auf, zur jeweils drehbaren Aufnahme einer Bindematerialrolle. Die jeweilige Rollenaufnahme ist dazu eingerichtet, eine Bindematerialrolle aufzunehmen. Die Bindematerialrolle, welche streng genommen nicht Teil der Bindeeinheit ist, weist normalerweise einen zylindrischen Rollenkern auf, der zum Beispiel aus Pappe oder Kunststoff bestehen kann. Auf diesen Rollenkern ist das Bindematerial aufgewickelt, zum Beispiel ein Netz oder eine Folie. Insgesamt ist die Bindematerialrolle normalerweise annähernd zylinderförmig ausgebildet, wobei die aktuelle Form auch davon abhängen kann, wie viel Bindematerial bereits abgewickelt wurde. Die Rollenaufnahme ist derart ausgebildet, dass die Bindematerialrolle drehbar aufgenommen werden kann, das heißt die Bindematerialrolle kann um eine Bindematerialrollenachse, die einer Symmetrieachse der Bindematerialrolle entsprechen kann, gedreht werden. Typischerweise verläuft diese Bindematerialrollenachse parallel zu einer Querachse der Rundballenpresse. Die Rollenaufnahme kann ganz oder teilweise innerhalb des Bindegehäuses angeordnet sein. Insgesamt weist die Bindeeinheit eine Mehrzahl von Rollenaufnahmen auf, so dass insgesamt eine Mehrzahl von Bindematerialrollen gleichzeitig aufgenommen werden kann. Im Betriebszustand könnten die einzelnen Bindematerialrollen das gleiche Bindematerial aufweisen oder unterschiedliche Arten von Bindematerial.

Des Weiteren ist eine Zuführeinheit vorgesehen, durch die Bindematerial von jeweils einer aus der Mehrzahl von Rollenaufnahmen auswählbaren aktiven Rollenaufnahme in Richtung der Presskammer heranführbar ist. Die Zuführeinheit führt das Bindematerial (von der Bindematerialrolle in der aktiven Rollenaufnahme) in Richtung der Presskammer heran, also zur Presskammer hin, so dass der Ballen dort mit dem Bindematerial gebunden oder umwickelt werden kann. Dabei ist es nicht notwendig, dass die Zuführeinheit das Bindematerial bis unmittelbar an oder gar in die Presskammer führt. Ein Teil des Zuführens kann durch ein anderes Element (zum Beispiel ein Presselement) erfolgen, an welches die Zuführeinheit das Bindematerial gewissermaßen übergibt. Das von der Bindematerialrolle entnommene Bindematerial wird normalerweise über eine oder mehrere Umlenkrollen geleitet, die zur Zuführeinheit gehören. Die jeweils aktive Rollenaufnahme kann vom Benutzer ausgewählt werden, je nachdem, welche der Bindematerialrollen aktuell genutzt werden soll. Dabei wird in jedem Fall die gleiche Zuführeinheit verwendet, unabhängig davon, welches die aktuell aktive Rollenaufnahme ist. Man kann sagen, dass die Zuführeinheit alternativ in Kombination mit jeweils einer der Rollenaufnahmen genutzt werden kann. Die Zuführeinheit kann Antriebsmittel aufweisen, durch die das Bindematerial aktiv gefördert werden kann. Solche Antriebsmittel sind allerdings nicht zwingend erforderlich und dementsprechend bei einigen Ausführungsformen auch nicht vorgesehen. Vielmehr kann das Bindematerial durch den in der Presskammer rotierenden Ballen mitgerissen werden, nachdem ein Ende des Bindematerialstrangs in Kontakt mit dem Ballen gebracht wurde.

Die Zuführeinheit kann wenigstens teilweise gegenüber dem Bindegehäuse verstellbar sein und eine Haltevorrichtung aufweisen, die dazu ausgebildet ist, einen Endbereich des Bindematerials zu halten und an die Presskammer heranzuführen. Die Haltevorrichtung kann beispielsweise als Zuführschnabel ausgebildet sein, der zwei aufeinander zulaufende Klemmelemente wie Bleche und/oder Gummitücher umfasst, zwischen denen ein Endbereich des Bindematerials eingeklemmt werden kann. Die Zuführvorrichtung kann wenigstens teilweise als Zuführpendel ausgebildet sein, wobei die Haltevorrichtung - zum Beispiel zusammen mit einer oder mehreren Umlenkrollen - an einem Träger angeordnet ist, der über zwei Schwenkarme mit dem Bindegehäuse verbunden ist. Es versteht sich, dass zum Verstellen der Zuführeinheit ein Aktor erforderlich ist. Die Zuführeinheit ist in diesem Fall verstellbar zwischen einer ausgefahrenen Position, in der das Bindematerial an die Presskammer herangeführt wird, und einer eingefahrenen Position, in der die Zuführeinheit kompakt am Rest der Bindeeinheit angeordnet sein kann.

Außerdem weist die Bindeeinheit eine Bremseinheit auf, die dazu eingerichtet ist, zum Bremsen einer Bindematerialrolle wenigstens indirekt mit dieser zusammenzuwirken. Die Bremseinheit ist dazu eingerichtet, mit der Bindematerialrolle entweder direkt (also unmittelbar) zusammenzuwirken oder indirekt (also mittelbar), wobei die Bremseinheit und die Bindematerialrolle über wenigstens ein zwischengeordnetes Element zusammenwirken. Durch das Zusammenwirken werden eine Bremskraft und/oder ein Bremsmoment auf die Bindematerialrolle erzeugt. Dabei ist es möglich, dass die Bremskraft nicht oder nur zu einem geringen Teil durch die Bremseinheit selbst ausgeübt wird. So könnte die Bremseinheit die Bindematerialrolle zum Beispiel gegen ein Element drücken, so dass zwischen diesem Element und der Bindematerialrolle eine Reibungskraft erzeugt wird, welche die Bindematerialrolle bremst. Die Bremseinheit dient dazu, das Bindematerial beim Abrollen zu bremsen und zu dehnen. Dabei schließt ein Bremsen der Bindematerialrolle auch ein Festhalten der Bindematerialrolle ein, das heißt, die Bremseinheit kann dazu eingerichtet sein, zeitweise eine Drehung der Bindematerialrolle vollständig zu verhindern. Die Bremswirkung, die die Bremseinheit wenigstens indirekt auf die Bindematerialrolle ausübt, ist normalerweise veränderbar. Das heißt sie kann zeitweise verstärkt oder vermindert werden.

Zusätzlich zu den oben genannten Komponenten kann die Bindeeinheit noch weitere Komponenten aufweisen, zum Beispiel eine Befülleinrichtung, die ein Nachfüllen von Bindematerialrollen unterstützt, einen Rückhaltebügel, der das bevorratete Bindematerial in der Bindematerialaufnahme sichert, eine Raffvorrichtung etc. Die Rundballenpresse kann ein unabhängig von der wenigstens einen Bindeeinheit mit dem Rahmen verbundenes Bindematerialmesser zum Abschneiden von Bindematerial aufweisen. Das Bindematerialmesser ist normalerweise beweglich mit dem Rahmen der Rundballenpresse verbunden. Alternativ kann auch die Bindeeinheit ein Bindematerialmesser aufweisen, welches zum Beispiel mit der Zuführeinheit verbunden sein kann und gegebenenfalls mit dieser verstellbar sein kann.

Erfindungsgemäß ist die Bremseinheit relativ zum Bindegehäuse verstellbar zwischen einer Mehrzahl von Bremspositionen, wobei jeder Rollenaufnahme wenigstens eine Bremsposition zugeordnet ist, und die Bremseinheit ist dazu eingerichtet, in einer Bremsposition, die einer Rollenaufnahme zugeordnet ist, mit der in dieser Rollenaufnahme aufgenommenen Bindematerialrolle wenigstens indirekt zusammenzuwirken, um diese zu bremsen. Die Bremseinheit ist somit nicht stationär am Bindegehäuse angeordnet, sondern kann verstellt werden. Dies schließt ausdrücklich die Möglichkeit ein, dass die Bremseinheit nur teilweise verstellbar ist, während ein Teil stationär bleibt. In jedem Fall kann sie eine Mehrzahl von Bremspositionen einnehmen. Jeder Rollenaufnahme ist wenigstens eine Bremsposition zugeordnet. Die Zuordnung ist in diesem Zusammenhang wechselseitig, somit ist jede Bremsposition einer Rollenaufnahme zugeordnet. Normalerweise stimmt die Anzahl der Bremspositionen mit derjenigen der Rollenaufnahmen überein, es wäre aber auch denkbar, dass einer Rollenaufnahme eine Mehrzahl von Bremspositionen zugeordnet sind. Die einer Rollenaufnahme zugeordnete Bremsposition kann insbesondere diejenige Bremsposition sein, in der die Bremseinheit am nächsten an dieser Rollenaufnahme angeordnet ist, dies ist allerdings nicht zwangsläufig der Fall. Es ist in jedem Fall möglich, die Bremseinheit jeweils in eine Bremsposition zu verstellen, die der aktiven Rollenaufnahme zugeordnet ist. Die Bremseinheit kann jeweils wenigstens indirekt mit derjenigen Bindematerialrolle zusammenwirken, die in der Rollenaufnahme angeordnet ist, der die Bremsposition zugeordnet ist. Optional kann eine Arretierung vorgesehen sein, um die Bremseinheit in der jeweiligen Bremsposition zu sichern. Es sind auch Ausführungsformen denkbar, in denen die Bremseinheit nicht in einer exakt festgelegten Position, sondern in einem gewissen Positionsbereich wenigstens indirekt mit der jeweiligen Bindematerialrolle zusammenwirken kann. Die exakte Bremsposition könnte zum Beispiel von der aktuellen Größe der Bindematerialrolle abhängen. In diesem Fall müsste man streng genommen von einem Bremspositionsbereich sprechen, was allerdings hier und im Folgenden von dem Begriff "Bremsposition" mit abgedeckt sein soll.

Für einen Wechsel von einer Bindematerialrolle zu einer anderen können die Rollenaufnahmen mit den darin aufgenommenen Bindematerialrollen in festgelegten Positionen am Bindegehäuse verbleiben, während die Bremseinheit in geeigneter Weise verstellt wird. Wie weiter unten noch ausgeführt wird, kann bei einigen Ausführungsformen eine geringfügige Verlagerung der Bindematerialrolle notwendig sein, diese ist allerdings für den Benutzer auch manuell ohne Weiteres handhabbar. Eine wesentliche Verlagerung der schweren Bindematerialrollen ist jedenfalls nicht nötig. Die Bremseinheit ihrerseits kann vergleichsweise leicht ausgestaltet sein, so dass der Benutzer sie auch manuell ohne größeren Aufwand verstellen kann. Es wäre aber auch möglich, einen Aktor vorzusehen, durch den die Bremseinheit verstellbar ist. Der Wechsel zwischen unterschiedlichen Bindematerialrollen ist insgesamt leicht durchzuführen, wobei die erfindungsgemäße Rundballenpresse mit einer geringen Anzahl an Komponenten auskommt und daher leicht und kostengünstig realisierbar ist. Insbesondere sind trotz einer Mehrzahl von Bindematerialrollen nur eine einzige Bremseinheit sowie eine einzige Zuführeinheit notwendig. Bei der Aktivierung einer Rollenaufnahme muss der Benutzer lediglich den Bindematerialstrang von der entsprechenden Bindematerialrolle ein Stück weit abwickeln und in die Zuführeinheit einführen sowie gegebenenfalls durch diese hindurch führen.

Im Rahmen der Erfindung sind unterschiedliche Arten von Bremseinheiten oder unterschiedliche Bremsmechanismen möglich. Zum Beispiel könnte die Bremseinheit mit einem drehbaren Element an einem Rollenkern angreifen, insbesondere in diesen eingreifen. Dabei kann ein Kraftschluss und/oder Formschluss hergestellt werden, letzteres insbesondere unter Verformung des Rollenkerns. Das drehbare Element, das zum Beispiel Klauen aufweisen kann, kann seinerseits an eine Bremse gekoppelt sein. Eine bevorzugte Ausgestaltung sieht vor, dass die Bremseinheit eine Bremsrolle aufweist, die um eine Bremsrollen-Drehachse drehbar gelagert ist und dazu eingerichtet ist, radial außenseitig an der Bindematerialrolle anzugreifen, um diese zu bremsen. Die Bremsrolle greift radial außenseitig an der Bindematerialrolle an, also bezüglich der Bindematerialrollenachse radial außenseitig. Das Eingreifen erfolgt somit an der Außenfläche oder Mantelfläche der Bindematerialrolle. Man kann auch sagen, dass die Mantelflächen der Bindematerialrolle und der Bremsrolle miteinander zusammenwirken. Dabei ist in der Regel ein Kraftschluss zwischen der Bindematerialrolle und der Bremsrolle gegeben. Dieser kann zum Beispiel dadurch gefördert werden, dass die Bremsrolle zumindest im Bereich ihrer Mantelfläche aus einem Elastomer, insbesondere Gummi, gebildet ist. Ein derartiges Material sorgt zum einen für einen hohen Reibungskoeffizienten, zum anderen kann es sich aufgrund seiner Elastizität an die Bindematerialrolle anpassen, was die Auflagefläche vergrößern und außerdem Beschädigungen des Bindematerials vorbeugen kann. Die Bremsrolle kann eine zylindrische Mantelfläche aufweisen, es sind allerdings auch Abweichungen von einer reinen Zylinderform denkbar. Die eigentliche Erzeugung der Bremskraft kann auf Seiten der Bremseinheit erfolgen. Es wäre aber auch möglich, dass die Bremsrolle die Bindematerialrolle gegen ein weiteres Element drückt, zum Beispiel ein stationäres Halteelement, so dass eine Reibungskraft zwischen diesem Element und der Bindematerialrolle erzeugt oder zumindest wesentlich verstärkt wird.

Bevorzugt ist die Bremsrolle entlang einer definierten Verstellbahn geführt zwischen zwei Bremspositionen verstellbar. Sofern mehr als zwei Bremspositionen vorgesehen sind, gilt dies normalerweise für jedes Paar von Bremspositionen. Die Verstellbahn kann zum Beispiel die Bewegung des Schwerpunkts und/oder Mittelpunkts der Bremsrolle beschreiben. Die Verstellbahn ist definiert, das heißt die Bremsrolle kann sich nur entlang der Verstellbahn von einer Bremsposition in die andere Bremsposition bewegen. Dabei wird ein naturgemäß immer vorhandenes Spiel außer Acht gelassen. Die Verstellbewegung ist geführt, das heißt die Bremsrolle und das Bindegehäuse wirken über eine Führung miteinander zusammen. Die Führung kann dabei wenigstens teilweise durch das Bindegehäuse und/oder die Bremseinheit gebildet sein.

Die Verstellbarkeit der Bremsrolle kann in unterschiedlicher Weise realisiert werden, beispielsweise durch eine translatorische, unter Umständen sogar geradlinige Verschiebung. Eine Ausgestaltung sieht vor, dass die Bremsrolle entlang einer wenigstens teilweise bogenförmigen Verstellbahn verstellbar ist. Die Verstellbahn kann auch insgesamt bogenförmig ausgebildet sein. Die Krümmung der Verstellbahn kann veränderlich oder konstant sein. In letzterem Fall ist die Verstellbahn kreisbogenförmig und lässt sich durch eine Rotation um eine bezüglich des Bindegehäuses stationäre Achse beschreiben. Normalerweise ist die wenigstens teilweise bogenförmige Verstellbahn durch eine Führung definiert, zum Beispiel eine Führungskulisse, wenigstens einen Führungsarm oder andere geeignete Führungselemente. Die wenigstens teilweise bogenförmige Verstellbahn ermöglicht i.Allg. eine bessere Annäherung an die Bremsposition und an die Bindematerialrolle als eine geradlinige Verstellbahn.

Insbesondere lässt sich eine kreisbogenförmige Verstellbahn dadurch realisieren, dass die Bremseinheit eine Bremsaufhängung aufweist, an welcher die Bremsrolle um die Bremsrollen-Drehachse drehbar gelagert ist und die um eine zur Bremsrollen-Drehachse versetzte Bremseinheit-Schwenkachse schwenkbar am Bindegehäuse gelagert ist. Diese Ausgestaltung ist insbesondere dann vorteilhaft, wenn genau zwei Rollenaufnahmen vorgesehen sind. Die Bremsaufhängung kann ein- oder mehrteilig ausgebildet sein. Zum Beispiel kann sie zwei Teile aufweisen, die auf gegenüberliegenden Seiten der Bremsrolle angeordnet sind. Die Bremsaufhängung ist bevorzugt in sich starr ausgebildet. Allerdings ist sie gegenüber dem Bindegehäuse schwenkbar. Die entsprechende Bremseinheit-Schwenkachse verläuft dabei normalerweise parallel zur Querachse der Rundballenpresse. Ebenso verlaufen die Bremseinheit-Schwenkachse und die Bremsrollen-Drehachse in aller Regel parallel zueinander.

Um einen Kraftschluss zwischen der Bremsrolle und der Bindematerialrolle herzustellen, muss eine Anpresskraft zwischen den beiden Rollen wirken. Diese könnte zum Beispiel durch ein Federelement oder einen Aktor erzeugt werden, welcher die Bremsrolle gegen die Bindematerialrolle vorspannt. Die Anpresskraft kann allerdings auch durch die Gewichtskraft der Bindematerialrolle erzeugt werden. Gemäß einer derartigen Ausgestaltung ist die Bremsrolle dazu eingerichtet, in der jeweiligen Bremsposition die in der Rollenaufnahme aufgenommene Bindematerialrolle wenigstens teilweise abzustützen. Dies bezieht sich selbstverständlich auf die Rollenaufnahme, der die Bremsposition zugeordnet ist. Umgekehrt stützt sich die Bindematerialrolle, die in der Rollenaufnahme aufgenommen ist, wenigstens teilweise auf der Bremsrolle ab. Das heißt, die Gewichtskraft der Bindematerialrolle wird wenigstens teilweise von der Bremsrolle aufgenommen. Zusätzlich kann die Bremsrolle auch horizontale Kraftkomponenten aufnehmen. Im Falle einer teilweisen Aufnahme der Gewichtskraft weist die Rollenaufnahme wenigstens ein weiteres Stützelement auf, welches den restlichen Teil der Gewichtskraft aufnimmt.

Eine Ausgestaltung sieht vor, dass wenigstens eine Rollenaufnahme eine positionsfest am Bindegehäuse gelagerte Stützrolle aufweist, die dazu eingerichtet ist, die Bindematerialrolle gemeinsam mit der Bremsrolle abzustützen. Die Stützrolle ist um eine Stützrollen-Drehachse drehbar am Bindegehäuse gelagert, welche ebenfalls in aller Regel parallel zur Querachse der Rundballenpresse verläuft. Die Stützrollen-Drehachse ist in aller Regel stationär am Bindegehäuse angeordnet. Die Stützrolle nimmt wie die Bremsrolle einen Teil der Gewichtskraft der Bindematerialrolle auf, wobei die Gewichtskraft zu gleichen Teilen oder auch ungleich verteilt sein kann. In horizontaler Richtung, genauer gesagt in Richtung der Längsachse der Rundballenpresse, sind die Stützrolle und die Bremsrolle auf unterschiedlichen Seiten des Schwerpunkts der Bindematerialrolle angeordnet. Zwischen ihnen ist normalerweise ein gewisser Bereich der Bindematerialrolle angeordnet, der nicht direkt unterstützt ist. Wenn sich die Bindematerialrolle dreht, wird die Stützrolle passiv mitgedreht, wobei es im Unterschied zur Bremsrolle unschädlich ist, wenn die Stützrolle teilweise nicht mitgeführt wird, also wenn Schlupf auftritt. Statt einer drehbaren Stützrolle könnte auch ein nicht-drehbares Stützelement verwendet werden, dessen Oberfläche nur einen geringen Reibungskoeffizienten mit dem Bindematerial bildet, so dass die Bindematerialrolle ohne größeren Widerstand über das Stützelement gleiten kann.

Soweit die Bremsrolle in der entsprechenden Bremsposition die Bindematerialrolle ganz oder teilweise abstützt, ergibt sich das Problem, wie die Bindematerialrolle gesichert werden kann, wenn die Bremsrolle verstellt wird. Gemäß einer Ausgestaltung weist wenigstens eine Rollenaufnahme eine Hilfsstützvorrichtung auf, die dazu eingerichtet ist, die Bindematerialrolle wenigstens teilweise abzustützen, wenn die Bremsrolle außerhalb der zugeordneten Bremsposition angeordnet ist. Normalerweise wird dies mit einer Ausführungsform kombiniert, in welcher die Bremsrolle in der Bremsposition die Bindematerialrolle teilweise abstützt. In diesem Fall stützt auch die Hilfsstützvorrichtung die Bindematerialrolle teilweise ab, während wenigstens ein weiteres Stützelement, beispielsweise die oben erwähnte Stützrolle, die restliche Gewichtskraft aufnimmt.

Eine Ausgestaltung sieht vor, dass wenigstens eine Hilfsstützvorrichtung eine Mehrzahl von parallel zur Bremsrollen-Drehachse beabstandeten Stützfingern aufweist, die dazu eingerichtet sind, die Bindematerialrolle jeweils anteilig abzustützen. Normalerweise sind 2 bis 4 Stützfinger vorgesehen, es wäre allerdings auch eine größere Anzahl möglich. Die Stützfinger sind jeweils parallel zur Bremsrollen-Drehachse beabstandet, in aller Regel also parallel zur Querachse der Rundballenpresse. Die Stützfinger einer Hilfsstützvorrichtung sind normalerweise identisch ausgebildet und/oder entlang der Bremsrollen-Drehachse symmetrisch zu einer senkrechten Mittelebene angeordnet, die beispielsweise der Längsmittelebene der Rundballenpresse entsprechen kann. Typischerweise sind die Stützfinger dazu vorgesehen, gleiche Anteile der Gewichtskraft der Bindematerialrolle aufzunehmen.

Es sind Ausführungsformen denkbar, bei denen die Hilfsstützvorrichtung beweglich mit dem Bindegehäuse verbunden ist. Dabei wäre sogar denkbar, dass die Hilfsstützvorrichtung (aktorisch oder manuell) zwischen einer Stützposition und einer Passivposition verstellbar ist. Um den Aufbau der Bindeeinheit möglichst einfach und stabil zu halten, ist es allerdings bevorzugt, dass die Hilfsstützvorrichtung starr mit dem Bindegehäuse verbunden ist. Das heißt die Hilfsstützvorrichtung verbleibt stets in der gleichen Position gegenüber dem Bindegehäuse, abgesehen von einer möglicherweise gegebenen elastischen Verformung. Falls die Hilfsstützvorrichtung wie oben beschrieben eine Mehrzahl von Stützfingern aufweist, sind sämtliche Stützfinger starr mit dem Bindegehäuse verbunden, wobei die Verbindung direkt oder indirekt gegeben sein kann.

Insbesondere, allerdings nicht ausschließlich, bei der oben genannten Ausgestaltung könnte es unter Umständen zu einem räumlichen Konflikt zwischen Bremsrolle und Hilfsstützvorrichtung kommen. Ein derartiger Konflikt kann auf unterschiedliche Weise vermieden oder gelöst werden. Eine Ausgestaltung sieht vor, dass die Bremsrolle wenigstens eine bezüglich der Bremsrollen-Drehachse tangential umlaufende, axial begrenzte und sich radial nach innen erstreckende Aussparung aufweist, in welcher die Hilfsstützvorrichtung in wenigstens einer Position der Bremsrolle wenigstens teilweise aufgenommen ist. Die jeweilige Aussparung kann auch als Einschnitt bezeichnet werden. Im Bereich der Aussparung weicht die Kontur der Bremsrolle radial nach innen zurück, was eine Abweichung von einer Zylinderform bedeutet. Die Formen der Hilfsstützvorrichtung sowie der wenigstens einen Aussparung sind so abgestimmt, dass in wenigstens einer Position der Bremsrolle wenigstens ein Teil der Hilfsstützvorrichtung in der Aussparung angeordnet ist. Man könnte auch sagen, in der entsprechenden Position greift die Hilfsstützvorrichtung in die wenigstens eine Aussparung ein. Insbesondere kann dies in einer Bremsposition der Fall sein, stattdessen oder zusätzlich kann es allerdings auch eine Position zwischen zwei Bremspositionen sein. Wenn die Hilfsstützvorrichtung eine Mehrzahl von Stützfingern aufweist, kann für jeden Stützfinger eine Aussparung vorgesehen sein. Insgesamt weist die Bremsrolle in diesem Fall eine Mehrzahl von axial bezüglich der Bremsrollen-Drehachse beabstandeten Aussparungen auf. Ein äußerster Stützfinger könnte allerdings auch seitlich der Bremsrolle angeordnet sein, so dass die Anzahl der Aussparungen geringer ist als die Anzahl der Stützfinger.

Bevorzugt ragt die Bremsrolle in der Bremsposition in Richtung der Bindematerialrolle über die Hilfsstützvorrichtung hinaus, so dass die Hilfsstützvorrichtung vollständig entlastet ist. Betrachtet man in der Bremsposition die Bindematerialrollenachse, das heißt die Symmetrieachse der Bindematerialrolle, so ist der (minimale) radiale Abstand der Bremsrolle geringer als der (minimale) radiale Abstand der Hilfsstützvorrichtung. Dementsprechend verhindert die Bremsrolle einen Kontakt zwischen der Hilfsstützvorrichtung und der Bindematerialrolle. Während die Bremsrolle die Gewichtskraft der Bindematerialrolle ganz oder teilweise aufnimmt, ist die Hilfsstützvorrichtung vollständig entlastet. Dementsprechend kommt es auch zu keiner Reibung zwischen der Bindematerialrolle und der Hilfsstützvorrichtung.

Der Weg, entlang dessen das Bindematerial von der jeweiligen Rollenaufnahme in Richtung der Presskammer geführt wird, hat je nach ausgewählter aktiver Rollenaufnahme einen unterschiedlichen Ausgangspunkt und unterscheidet sich somit zumindest teilweise. Im Allgemeinen sind eine Mehrzahl von Führungselementen wie beispielsweise Umlenkrollen erforderlich, um das Bindematerial in vorgesehener Weise der Presskammer zuzuführen. Je nach Ausgestaltung der Bindeeinheit und Anordnung der Rollenaufnahmen wäre es möglich, unterschiedliche Führungselemente vorzusehen, je nachdem, welche Rollenaufnahme aktiv ist. Dies ist allerdings im Allgemeinen unerwünscht, da sich hierdurch die Anzahl der Bauteile und das Gesamtgewicht erhöhen. Es ist daher bevorzugt, dass die Zuführeinheit eine Mehrzahl von Führungselementen für Bindematerial aufweist, welche wenigstens überwiegend zusammen mit einer beliebigen aktiven Rollenaufnahme nutzbar sind. Das heißt, die jeweiligen Führungselemente können zum Führen des Bindematerials genutzt werden, unabhängig davon, welches die aktiver Rollenaufnahme ist. Besonders bevorzugt gilt dies für sämtliche Führungselemente.

Die Aufgabe wird weiterhin gelöst mit einer Bindeeinheit für eine Rundballenpresse, welche eine Pressvorrichtung aufweist zum Pressen von landwirtschaftlichem Erntegut zu einem Ballen in einer Presskammer, wobei die Bindeeinheit ein Bindegehäuse aufweist, eine wenigstens teilweise im Bindegehäuse angeordnete Mehrzahl von Rollenaufnahmen zur jeweils drehbaren Aufnahme einer Bindematerialrolle, eine Zuführeinheit, durch die Bindematerial von jeweils einer aus der Mehrzahl von Rollenaufnahmen auswählbaren aktiven Rollenaufnahme in Richtung der Presskammer heranführbar ist, sowie eine Bremseinheit, die dazu eingerichtet ist, zum Bremsen einer Bindematerialrolle wenigstens indirekt mit dieser zusammenzuwirken.

Erfindungsgemäß ist die Bremseinheit relativ zum Bindegehäuse verstellbar zwischen einer Mehrzahl von Bremspositionen, wobei jeder Rollenaufnahme wenigstens eine Bremsposition zugeordnet ist, und die Bremseinheit ist dazu eingerichtet, in einer Bremsposition, die einer Rollenaufnahme zugeordnet ist, wenigstens indirekt mit der in dieser Rollenaufnahme aufgenommenen Bindematerialrolle zusammenzuwirken, um diese zu bremsen.

Die genannten Begriffe wurden bereits mit Bezug auf die erfindungsgemäße Rundballenpresse erläutert und werden daher nicht nochmals erklärt. Bevorzugte Ausgestaltungen der erfindungsgemäßen Bindeeinheit entsprechen denen der erfindungsgemäßen Rundballenpresse.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer ersten erfindungsgemäßen Rundballenpresse mit einer erfindungsgemäßen Bindeeinheit;
- Fig. 2: eine perspektivische Darstellung der Bindeeinheit aus Fig. 1;
- Fig. 3: eine Seitenansicht der Bindeeinheit aus Fig.1;
- Fig. 4: eine seitliche Schnittdarstellung eines Teils der Rundballenpresse aus Fig.1 in einem ersten Zustand; sowie
- Fig. 5: eine seitliche Schnittdarstellung eines Teils der Rundballenpresse aus Fig.1 in einem zweiten Zustand.

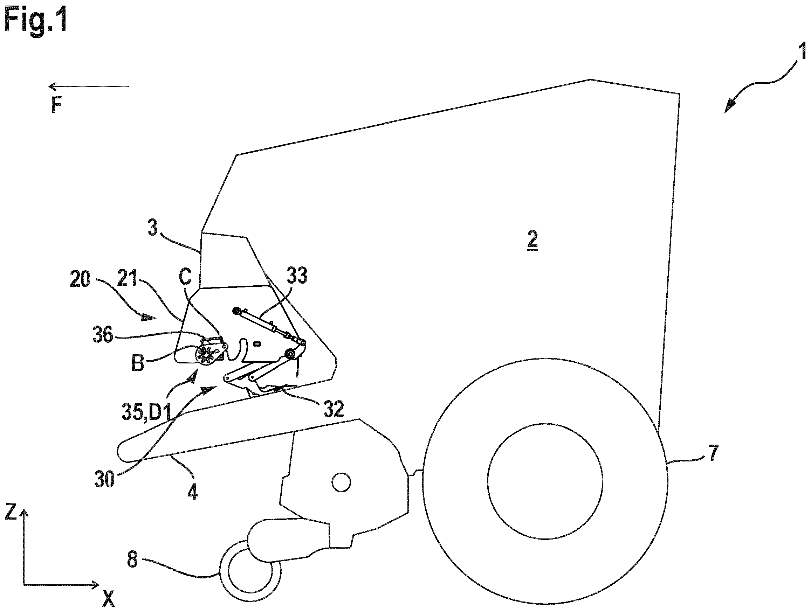

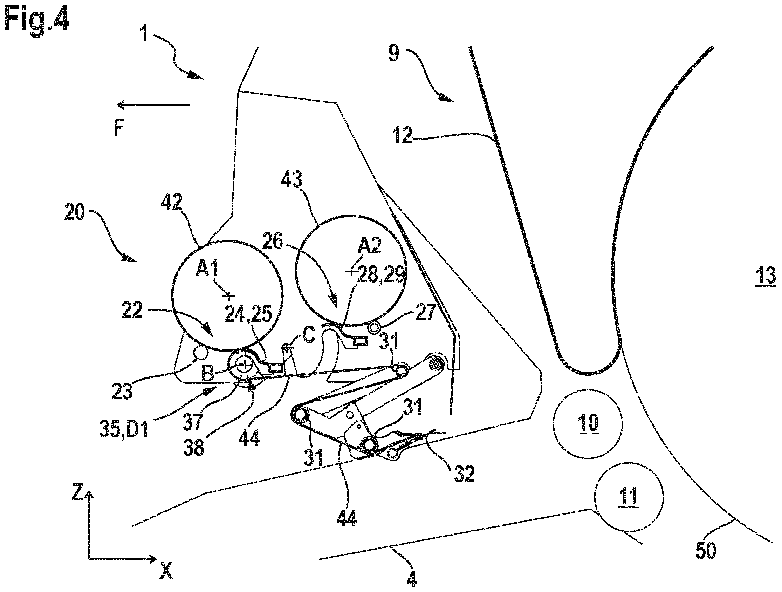

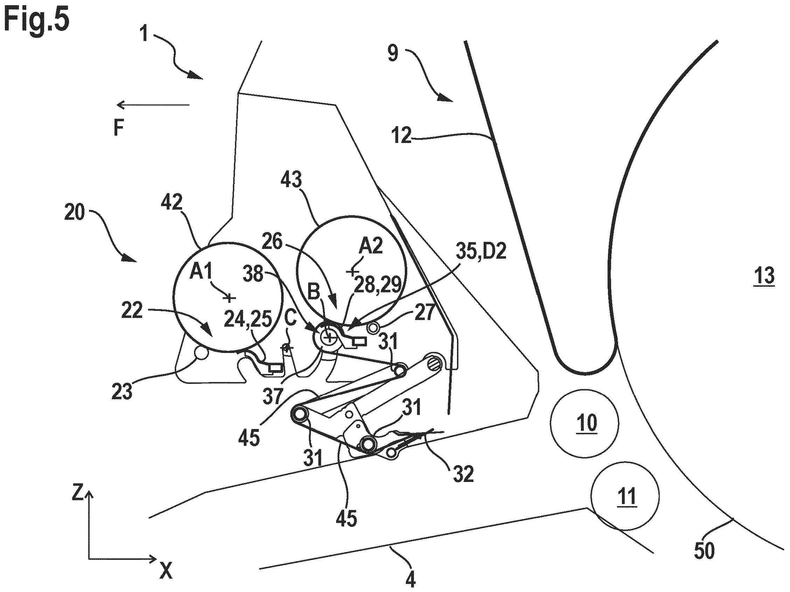

Fig. 1 - 5 zeigen eine erste Ausführungsform einer erfindungsgemäßen Rundballenpresse 1. Diese weist einen Rahmen 2 auf, der ihr insgesamt strukturelle Stabilität verleiht. Der Rahmen 2 ist auf hier schematisch dargestellten Laufrädern 7 abgestützt. In einer Fahrtrichtung F vorderseitig ist am Rahmen 2 eine Deichsel 4 angeordnet, über welche die Rundballenpresse 1 mit einem hier nicht dargestellten Schlepper verbunden werden kann. In den Figuren sind jeweils eine entgegen der Fahrtrichtung F nach hinten weisende Längsachse X, eine in Fahrtrichtung gesehen nach rechts weisende Querachse Y sowie eine nach oben weisende Hochachse Z der Rundballenpresse 1 eingezeichnet. Die Darstellung in Fig.1 ist vereinfacht und verschiedene Elemente, die nicht wesentlich für die vorliegende Erfindung sind, wurden weggelassen oder nicht mit Bezugszeichen versehen. Hierzu zählt eine auf Hilfsrädern 8 abgestützte Pick-up, mit welcher Erntegut vom Boden aufgenommen und über einen Zuführkanal weiter zu einem Förderrotor befördert wird. Der Förderrotor, der auch als Schneidrotor ausgebildet sein kann, befördert das Erntegut durch den Zuführkanal weiter zu einer Presskammer 13 innerhalb des Rahmens 2 (siehe Fig. 4 und 5). Die Presskammer 13 wird durch eine Pressvorrichtung 9 ausgebildet, von welcher zwei Walzen 10, 11 sowie eine Mehrzahl von Pressriemen 12 dargestellt sind.

Die Pressriemen 12 sind in geeigneter Weise durch Führungsrollen geführt, die hier aus Gründen der Übersichtlichkeit nicht dargestellt sind.

In Fig. 4 und 5 ist ein fertiger Ballen 50 dargestellt, zu dem Erntegut in der Presskammer 13 verpresst wurde. Bevor der Ballen 50 ausgeworfen wird, wird er mit Bindematerial 44, 45 umwickelt, wozu die Rundballenpresse eine Bindeeinheit 20 aufweist. Die Bindeeinheit 20 weist ein Bindegehäuse 21 auf, in welchem eine erste Rollenaufnahme 22 sowie eine zweite Rollenaufnahme 26 angeordnet sind. Jede der Rollenaufnahmen 22, 26 ist dazu ausgebildet, eine Bindematerialrolle 42, 43 drehbar aufzunehmen. Zur Abstützung der Bindematerialrolle 42, 43 weist die jeweilige Rollenaufnahme 22, 26 jeweils eine Stützrolle 23, 27 auf sowie eine Hilfsstützvorrichtung 24, 28. Die Hilfsstützvorrichtung 24, 28 weist eine Mehrzahl von Stützfingern 25, 29 auf, die starr mit dem Bindegehäuse 21 verbunden und in Richtung der Querachse Y beabstandet sind.

Über eine Zuführeinheit 30, welche ein Zuführpendel mit einem endseitig angeordneten Zuführschnabel 32 aufweist, kann Bindematerial 44, 45, welches von einer der Bindematerialrollen 42, 43 abgewickelt wurde, in Richtung auf die Presskammer 13 geführt werden. Mittels eines Aktors 33 kann das Zuführpendel entgegen der Fahrtrichtung F nach hinten bewegt werden, so dass der Zuführschnabel 32 in den Bereich zwischen den sich drehenden Walzen 10, 11 ragt (in den Figuren nicht dargestellt). Dort kann das Bindematerial 44, 45 von einer der Walzen 10, 11 sowie vom sich drehenden Ballen 50 mitgerissen werden, so dass es um den Ballen 50 gewickelt wird. Zur Führung des Bindematerials 44, 45 weist die Zuführeinheit 30 eine Mehrzahl von Umlenkrollen 31 auf. Fig. 4 zeigt einen Zustand, in dem die erste Rollenaufnahme 22 aktiv ist, also Bindematerial 44 von der dort aufgenommenen Bindematerialrolle 42 verwendet wird. Demgegenüber zeigt Fig. 5 einen Zustand, in welchem die zweite Rollenaufnahme 26 aktiv ist und somit Bindematerial 45 von der dort aufgenommenen Bindematerialrolle 43 genutzt wird. Dabei ist gut erkennbar, dass die Umlenkrollen 31 sowie der Zuführschnabel 32 in beiden Fällen genutzt werden können. Das heißt die Zuführeinheit 30 kann zusammen mit einer beliebigen Rollenaufnahme 22, 26 genutzt werden.

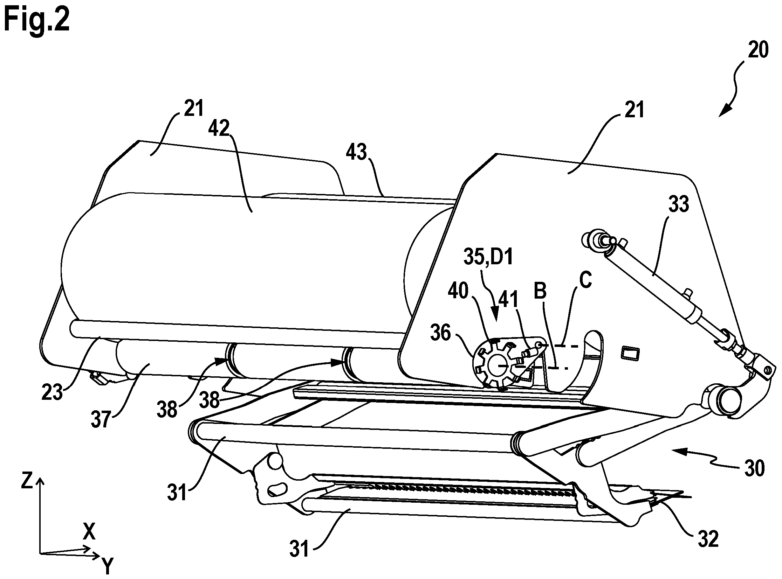

Die in der jeweils aktiven Rollenaufnahme 22, 26 aufgenommenen Bindematerialrolle 42, 43 dreht sich um eine Bindematerialrollenachse A1, A2, während das Bindematerial 44, 45 abgewickelt wird. Um das abgewickelte Bindematerial 44, 45 zu straffen und zu dehnen, wird die Drehbewegung der Bindematerialrolle 42, 43 abgebremst. Hierzu ist eine Bremseinheit 35 vorgesehen. Diese weist als wesentliches Element eine Bremsrolle 37 auf, die um eine Bremsrollen-Drehachse B drehbar an einer Bremsaufhängung 36 gelagert ist. Die Bremsaufhängung 36 wiederum ist um eine Bremseinheit-Schwenkachse C schwenkbar mit dem Bindegehäuse 21 verbunden. Die genannten Achsen B, C verlaufen jeweils parallel zur Querachse Y. Fig. 1 bis 4 zeigen die Bremseinheit 35 jeweils in einer ersten Bremsposition D1, die der ersten Rollenaufnahme 22 zugeordnet ist. In diesem Zustand ist die erste Bindematerialrolle 42 nicht durch die ersten Stützfinger 25 abgestützt, sondern ausschließlich durch die erste Stützrolle 23 und die Bremsrolle 37. Wie insbesondere in Fig. 2 erkennbar ist, weist die Bremsrolle 37 eine Mehrzahl von Aussparungen 38 auf. Diese sind bezüglich der Bremsrollen-Drehachse B zueinander beabstandet, wobei sie tangential umlaufend ausgebildet sind und sich radial nach innen erstrecken. Ihre Größe und Position sind so abgestimmt, dass jeweils ein Stützfinger 25 in einer Aussparung 38 aufgenommen werden kann, wie in Fig. 4 dargestellt, in welcher die Schnittebene durch eine der Aussparungen 38 verläuft. Da die Stützfinger 25 in den Aussparungen 38 aufnehmbar sind, kann die Bremsrolle 37 in Richtung der Bindematerialrolle 42 über die Stützfinger 25 hinausragen, so dass die Hilfsstützvorrichtung 24 insgesamt entlastet ist.

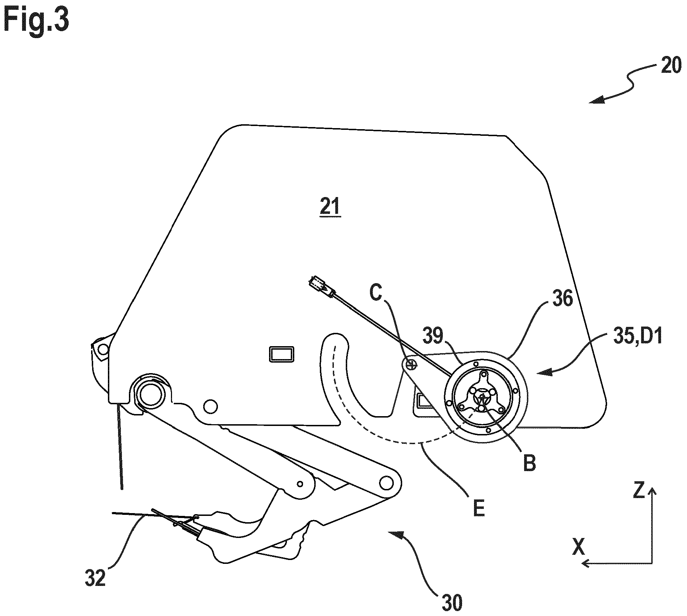

Die Bremsrolle 37 ist einerseits an ein Sensorrad 40 gekoppelt, das mit einem Drehzahlsensor 41 zusammenwirkt, über den die Drehzahl der Bremsrolle 37 und somit die Geschwindigkeit des Bindematerials 44 ermittelt werden können. Andererseits ist die Bremsrolle 37 an eine in Fig. 3 erkennbare Bremse 39 gekoppelt, die in diesem Fall als elektrische Bremse ausgebildet ist, aber zum Beispiel auch als Hydraulikbremse ausgebildet sein könnte. Über die Bremse 39 kann die Bremskraft und somit das Bremsmoment, welches die Bremsrolle 37 ausübt, eingestellt werden.

Wenn der Benutzer statt der Bindematerialrolle 42 in der ersten Rollenaufnahme 22 die Bindematerialrolle 43 in der zweiten Rollenaufnahme 26 nutzen möchte, muss die Bremseinheit 35 verstellt werden. Hierzu wird die Bremseinheit 35 insgesamt um die Bremseinheit-Schwenkachse C geschwenkt, wobei sich die Bremsrolle 37 entlang einer in Fig. 3 dargestellten kreisbogenförmigen Verstellbahn E bewegt. Dabei muss zunächst eine in den Figuren nicht dargestellte Arretierung gelöst werden, die die Bremseinheit 35 in der ersten Bremsposition D1 hält. Wenn die Bremseinheit 35 aus der ersten Bremsposition D1 herausbewegt wird, passieren die Stützfinger 25 die entsprechenden Aussparungen 38, so dass es zu keiner Kollision kommt. Die Seite der Bindematerialrolle 42, die durch die Bremsrolle 37 gestützt wurde, bewegt sich geringfügig abwärts (zum Beispiel um einige Millimeter oder wenige Zentimeter), bis sie auf den Stützfingern 25 aufliegt. Durch das Verschwenken der Bremseinheit 35 gelangt die Bremsrolle 37 schließlich in die in Fig. 5 dargestellte zweite Bremsposition D2, die der zweiten Rollenaufnahme 26 zugeordnet ist. Dabei werden die Stützfinger 29 der zugehörigen zweiten Hilfsstützvorrichtung 28 wiederum in den Aussparungen 38 aufgenommen und schließlich vollständig entlastet. Hierzu muss die eine Seite der Bindematerialrolle 43 geringfügig aufwärts bewegt werden (zum Beispiel um einige Millimeter oder Zentimeter). Die Bremseinheit 35 kann nun mit einer ebenfalls nicht dargestellten Arretierung in der zweiten Bremsposition D2 gesichert werden. Der Benutzer kann Bindematerial 45 von der Bindematerialrolle 43 abwickeln und wie in Fig. 5 dargestellt über die Umlenkrollen 31 zum Zuführschnabel 32 führen.

Insgesamt lässt sich der Wechsel zwischen den unterschiedlichen Bindematerialrollen 42, 43 mit einer einzigen Bremseinheit 35 sowie einer einzigen Zuführeinheit 30 realisieren. Die schweren und unhandlichen Bindematerialrollen 42, 43 bleiben dabei, abgesehen von dem beschriebenen geringfügigen Anheben, im Wesentlichen in Position, so dass der gesamte Wechsel von einem Benutzer manuell durchgeführt werden kann. Alternativ könnte allerdings auch ein Aktor vorgesehen sein, um die Bremseinheit 35 zwischen den Bremspositionen D1, D2 zu verstellen.

## Patentansprüche

1. Rundballenpresse (1), mit einer Pressvorrichtung (9) zum Pressen von landwirtschaftlichem Erntegut zu einem Ballen (50) in einer Presskammer (13), sowie einer Bindeeinheit (20), aufweisend ein Bindegehäuse (21), eine wenigstens teilweise im Bindegehäuse (21) angeordnete Mehrzahl von Rollenaufnahmen (22, 26) zur jeweils drehbaren Aufnahme einer Bindematerialrolle (42, 43), eine Zuführeinheit (30), durch die Bindematerial (44, 45) von jeweils einer aus der Mehrzahl von Rollenaufnahmen (22, 26) auswählbaren aktiven Rollenaufnahme (22, 26) in Richtung der Presskammer (13) heranführbar ist, sowie eine Bremseinheit (35), die dazu eingerichtet ist, zum Bremsen einer Bindematerialrolle (42, 43) wenigstens indirekt mit dieser zusammenzuwirken,
**dadurch gekennzeichnet, dass**
die Bremseinheit (35) relativ zum Bindegehäuse (21) verstellbar ist zwischen einer Mehrzahl von Bremspositionen (D1, D2), wobei jeder Rollenaufnahme (22, 26) wenigstens eine Bremsposition (D1, D2) zugeordnet ist, und die Bremseinheit (35) dazu eingerichtet ist, in einer Bremsposition (D1, D2), die einer Rollenaufnahme (22, 26) zugeordnet ist, wenigstens indirekt mit der in dieser Rollenaufnahme (22, 26) aufgenommenen Bindematerialrolle (42, 43) zusammenzuwirken, um diese zu bremsen.

2. Rundballenpresse nach Anspruch 1, **dadurch gekennzeichnet, dass** die Bremseinheit (35) eine Bremsrolle (37) aufweist, die um eine Bremsrollen-Drehachse (B) drehbar gelagert ist und dazu eingerichtet ist, radial außenseitig an der Bindematerialrolle (42, 43) anzugreifen, um diese zu bremsen.

3. Rundballenpresse nach einem der vorangehenden Ansprüche, **dadurch gekennzeichnet, dass** die Bremsrolle (37) entlang einer definierten Verstellbahn (E) geführt zwischen zwei Bremspositionen (D1, D2) verstellbar ist.

4. Rundballenpresse nach einem der vorangehenden Ansprüche, **dadurch gekennzeichnet, dass** die Bremsrolle (37) entlang einer wenigstens teilweise bogenförmigen Verstellbahn (E) verstellbar ist.

5. Rundballenpresse nach einem der vorangehenden Ansprüche, **dadurch gekennzeichnet, dass** die Bremseinheit (35) eine Bremsaufhängung (36) aufweist, an welcher die Bremsrolle (37) um die Bremsrollen-Drehachse (B) drehbar gelagert ist und die um eine zur Bremsrollen-Drehachse (B) versetzte Bremseinheit-Schwenkachse (C) schwenkbar am Bindegehäuse (21) gelagert ist.

6. Rundballenpresse nach einem der vorangehenden Ansprüche, **dadurch gekennzeichnet, dass** die Bremsrolle (37) dazu eingerichtet ist, in der jeweiligen Bremsposition (D1, D2) die in der Rollenaufnahme (22, 26) aufgenommene Bindematerialrolle (42, 43) wenigstens teilweise abzustützen.

7. Rundballenpresse nach einem der vorangehenden Ansprüche, **dadurch gekennzeichnet, dass** wenigstens eine Rollenaufnahme (22, 26) eine positionsfest am Bindegehäuse (21) gelagerte Stützrolle (23, 27) aufweist, die dazu eingerichtet ist, die Bindematerialrolle (42, 43) gemeinsam mit der Bremsrolle (37) abzustützen.

8. Rundballenpresse nach einem der vorangehenden Ansprüche, **dadurch gekennzeichnet, dass** wenigstens eine Rollenaufnahme (22, 26) eine Hilfsstützvorrichtung (24, 28) aufweist, die dazu eingerichtet ist, die Bindematerialrolle (42, 43) wenigstens teilweise abzustützen, wenn die Bremsrolle (37) außerhalb der zugeordneten Bremsposition (D1, D2) angeordnet ist.

9. Rundballenpresse nach einem der vorangehenden Ansprüche, **dadurch gekennzeichnet, dass** wenigstens eine Hilfsstützvorrichtung (24, 28) eine Mehrzahl von parallel zur Bremsrollen-Drehachse (B) beabstandeten Stützfingern (25, 29) aufweist, die dazu eingerichtet sind, die Bindematerialrolle (42, 43) jeweils anteilig abzustützen.

10. Rundballenpresse nach einem der vorangehenden Ansprüche, **dadurch gekennzeichnet, dass** die Hilfsstützvorrichtung (24, 28) starr mit dem Bindegehäuse (21) verbunden ist.

11. Rundballenpresse nach einem der vorangehenden Ansprüche, **dadurch gekennzeichnet, dass** die Bremsrolle (37) wenigstens eine bezüglich der Bremsrollen-Drehachse (B) tangential umlaufende, axial begrenzte und sich radial nach innen erstreckende Aussparung (38) aufweist, in welcher die Hilfsstützvorrichtung (24, 28) in wenigstens einer Position (D1, D2) der Bremsrolle (37) wenigstens teilweise aufgenommen ist.

12. Rundballenpresse nach einem der vorangehenden Ansprüche, **dadurch gekennzeichnet, dass** die Bremsrolle (37) in der Bremsposition (D1, D2) in Richtung der Bindematerialrolle (42, 43) über die Hilfsstützvorrichtung (24, 28) hinausragt, so dass die Hilfsstützvorrichtung (24, 28) vollständig entlastet ist.

13. Rundballenpresse nach einem der vorangehenden Ansprüche, **dadurch gekennzeichnet, dass** die Zuführeinheit (30) eine Mehrzahl von Führungselementen (31, 32) für Bindematerial (44, 45) aufweist, welche wenigstens überwiegend zusammen mit einer beliebigen aktiven Rollenaufnahme (22, 26) nutzbar sind.

## Claims

1. Round baler (1), having a pressing apparatus (9) for pressing harvested agricultural crops into a bale (50) in a pressing chamber (13), and a binding unit (20) having a binding housing (21), a plurality of roll holders (22, 26) arranged at least partially in the binding housing (21), each for rotatably receiving a binding material roll (42, 43), a feed unit (30) through which binding material (44, 45) can be fed from an active roll holder (22, 26) selectable from the plurality of roll holders (22, 26) in the direction of the pressing chamber (13), and a braking unit (35) configured to cooperate at least indirectly with a binding material roll (42, 43) to brake it,
**characterized in that**
the braking unit (35) is adjustable, relative to the binding housing (21), between a plurality of braking positions (D1, D2), wherein each roll holder (22, 26) is assigned at least one braking position (D1, D2), and the braking unit (35) is configured, in a braking position (D1, D2) assigned to a roll holder (22, 26), to cooperate at least indirectly with the binding material roll (42, 43), held in this roll holder (22, 26), in order to brake it.

2. Round baler according to claim 1, **characterized in that** the braking unit (35) has a braking roller (37) that is rotatably mounted about a braking roller axis of rotation (B) and is configured to engage the binding material roll (42, 43) radially on the outside in order to brake it.

3. Round baler according to any of the preceding claims,
**characterized in that** the braking roller (37) is guided along a defined adjustment path (E) and is adjustable between two braking positions (D1, D2).

4. Round baler according to any of the preceding claims,
**characterized in that** the braking roller (37) is adjustable along an at least partially arcuate adjustment path (E).

5. Round baler according to any of the preceding claims,
**characterized in that** the braking unit (35) has a brake suspension (36) on which the braking roller (37) is rotatably mounted about the braking roller axis of rotation (B) and which is pivotably mounted on the binding housing (21) about a braking unit pivot axis (C) offset from the braking roller axis of rotation (B).

6. Round baler according to any of the preceding claims,
**characterized in that** the braking roller (37) is configured, in the particular braking position (D1, D2), to at least partially support the binding material roll (42, 43) held in the roll holder (22, 26).

7. Round baler according to any of the preceding claims,
**characterized in that** at least one roll holder (22, 26) has a support roller (23, 27) that is mounted in a fixed position on the binding housing (21) and is configured to support the binding material roll (42, 43) together with the braking roller (37).

8. Round baler according to any of the preceding claims,
**characterized in that** at least one roll holder (22, 26) has an auxiliary support apparatus (24, 28) configured to at least partially support the binding material roll (42, 43) when the braking roller (37) is arranged outside the associated braking position (D1, D2).

9. Round baler according to any of the preceding claims,
**characterized in that** at least one auxiliary support apparatus (24, 28) has a plurality of support fingers (25, 29) spaced apart parallel to the braking roller axis of rotation (B), which support fingers are configured to support the binding material roll (42, 43) in each case proportionately.

10. Round baler according to any of the preceding claims,
**characterized in that** the auxiliary support apparatus (24, 28) is rigidly connected to the binding housing (21).

11. Round baler according to any of the preceding claims,
**characterized in that** the braking roller (37) has at least one recess (38) that runs tangentially around the braking roller axis of rotation (B), is axially limited and extends radially inwards, and in which the auxiliary support apparatus (24, 28) is at least partially held in at least one position (D1, D2) of the braking roller (37).

12. Round baler according to any of the preceding claims,
**characterized in that** the braking roller (37) in the braking position (D1, D2) projects beyond the auxiliary support apparatus (24, 28) in the direction of the binding material roll (42, 43), so that the auxiliary support apparatus (24, 28) is completely relieved.

13. Round baler according to any of the preceding claims,
**characterized in that** the feed unit (30) has a plurality of guide elements (31, 32) for binding material (44, 45), which guide elements can be used at least predominantly together with any active roll holder (22, 26).

## Revendications

1. Presse à balles rondes (1) comprenant un dispositif de presse (9) pour presser les produits agricoles récoltés pour former une balle (50) dans une chambre de presse (13) ainsi qu'une unité de nouage (20) comprenant un boîtier de nouage (21), un ensemble de logements de rouleau (22, 26) installés au moins en partie dans le boîtier de nouage (21) pour recevoir en rotation chaque fois un rouleau de matériau de nouage (42, 43), une unité d'alimentation (30) pour fournir le matériau de nouage (44, 45) respectivement de l'un des logements de rouleau actif (22, 26) sélectionné parmi l'ensemble des logements de rouleau (22, 26), en direction de la chambre de presse (13) ainsi qu'une unité de freinage (35) pour freiner le rouleau de matériau de nouage (42, 43) encore opérant au moins directement avec celui-ci,
presse **caractérisée en ce que**
l'unité de freinage (35) est réglable par rapport au boîtier de nouage (21) entre un ensemble de positions de freinage (D1, D2), chaque logement de rouleau (22, 26) étant associé à au moins une position de freinage (D1, D2), et
l'unité de freinage (35) est conçue pour dans une position de freinage (D1, D2) associée à un support de rouleau (22, 26), coopérer au moins indirectement avec le rouleau de matériau de nouage (42, 43) pour freiner le rouleau reçu dans ce logement de rouleau (22, 26).

2. Presse à balles rondes (1) selon la revendication 1,
**caractérisé en ce que**
l'unité de freinage (35) a un rouleau de frein (37) monté à rotation autour d'un axe de rotation de rouleau de frein (B) et conçu pour s'appliquer radialement contre le côté extérieur du rouleau de matériau de nouage (42, 43) et freiner celui-ci.

3. Presse à balles rondes (1) selon l'une des revendications précédentes, **caractérisée en ce que**
le rouleau de frein (37) est réglable en étant guidé sur une trajectoire de réglage (E) définie entre deux positions de freinage (D1, D2).

4. Presse à balles rondes (1) selon l'une des revendications précédentes, **caractérisée en ce que**
le rouleau de frein (37) est réglable le long d'une trajectoire de réglage (E) au moins partiellement de forme courbe.

5. Presse à balles rondes (1) selon l'une des revendications précédentes, **caractérisée en ce que**
l'unité de frein (35) a une suspension de frein (36) à laquelle le rouleau de frein (37) est monté à rotation autour de l'axe de rotation de rouleau de frein (B) et qui est montée pivotante sur le boîtier de nouage (21) autour d'un axe de pivotement (C) de l'unité de frein décalée par rapport à l'axe de rotation du rouleau de frein (B).

6. Presse à balles rondes (1) selon l'une des revendications précédentes, **caractérisée en ce que**
le rouleau de frein (37) est conçu pour soutenir au moins partiellement le rouleau de matériau de nouage (42, 43) dans le logement de rouleau (22, 26) dans la position de freinage (D1, D2) respective.

7. Presse à balles rondes (1) selon l'une des revendications précédentes, **caractérisée en ce que**
au moins un logement de rouleau (22, 26) a un rouleau d'appui (23, 27) monté de manière fixe en position dans le boîtier de nouage (21) et qui est conçu pour soutenir le rouleau de matériau de nouage (42, 43) en commun avec le rouleau de frein (37).

8. Presse à balles rondes (1) selon l'une des revendications précédentes, **caractérisée en ce qu'**au moins
un logement de rouleau (22, 26) a un dispositif d'appui auxiliaire (24, 28) pour soutenir au moins partiellement le rouleau de matériau de nouage (42, 43) lorsque le rouleau de frein (37) est au-delà de la position de freinage (D1, D2) associée.

9. Presse à balles rondes (1) selon l'une des revendications précédentes, **caractérisée en ce qu'**au moins
un dispositif d'appui auxiliaire (24, 28) a plusieurs doigts de support (25, 29) écartés parallèlement à l'axe de rotation de rouleau de frein (B), ces doigts étant conçus pour soutenir respectivement partiellement le rouleau de matériau de nouage (42, 43).

10. Presse à balles rondes (1) selon l'une des revendications précédentes, **caractérisée en ce que**
le dispositif d'appui auxiliaire (24, 28) est relié rigidement au boîtier de nouage (21).

11. Presse à balles rondes (1) selon l'une des revendications précédentes, **caractérisée en ce que**
le rouleau de frein (37) a au moins un évidement (38) tournant tangentiellement par rapport à l'axe de rotation de rouleau de frein (B), qui est limité axialement et s'étend radialement vers l'intérieur, et qui reçoit au moins partiellement le dispositif d'appui auxiliaire (24, 28) dans au moins une position (D1, D2) du rouleau de frein (37).

12. Presse à balles rondes (1) selon l'une des revendications précédentes, **caractérisée en ce que**
le rouleau de frein (37), en position de freinage (D1, D2), vient en saillie en direction du rouleau de matériau de nouage (42, 43) au-delà du dispositif d'appui auxiliaire (24, 28) pour ainsi décharger complètement le dispositif d'appui auxiliaire (24, 28).

13. Presse à balles rondes (1) selon l'une des revendications précédentes, **caractérisée en ce que**
l'unité d'alimentation (30) comporte un ensemble d'éléments de guidage (31, 32) pour le matériau de nouage (44, 45) et qui sont utilisés au moins principalement en commun avec un logement de rouleau (22, 26) quelconque actif.
